# EUROPEAN PATENT APPLICATION

(11) **EP 4 742 044 A1**
(43) Date of publication of application: **13.05.2026**
(21) Application number: 25206858.0
(22) Date of filing: 06.10.2025
(51) Int. Cl.: G06F 11/32, G06F 11/3668, G06F 11/3698

(54) **SYSTEM, METHOD, AND COMPUTER PROGRAM FOR VIEWING TEST CASE RESULTS**

(30) Priority: 07.11.2024 US 202418940075
(71) Applicant: TOYOTA JIDOSHA KABUSHIKI KAISHA, Toyota-shi, Aichi-ken 471-8571 (JP)
(72) Inventor: CHEN, Beck, Tokyo, 103-0022 (JP); BACHELOR, Benjamin, California, 94304 (US); POZIMENKO, Alexey, California, 94304 (US); BHATKHANDE, Pranav Suhas, California, 94304 (US); WU, Hao, California, 94304 (US); REED, Sheldon Anthony, California, 94304 (US); WEBB, Edwin, California, 94304 (US); JAISHANKER, Vijay Saravana, California, 94304 (US); KANDRU, Nischel, California, 94304 (US); ARMELLINI, Nicola, Tokyo, 103-0022 (JP); WANG, Xiaoyu, Tokyo, 103-0022 (JP); TSUKISHIMA, Ruriko, Tokyo, 103-0022 (JP); AKIYAMA, Jun, Tokyo, 103-0022 (JP)
(74) Representative: D Young & Co LLP

(57) **Abstract**

Provided are system, method, and device for testing a vehicle software. According to example embodiments, the system may include: a memory storage storing computer-executable instructions; and at least one processor communicatively coupled to the memory storage, wherein the at least one processor may be configured to execute the instructions to: generate a graphical user interface comprising at least a first portion and a second portion, where the first portion may include one or more elements of a test environment, and where the second portion may include a log area; receive a selection input selecting one of the one or more elements displayed at the first portion from a user; and in response to receiving the selection input, display a test log associated with only the selected one of the one or more elements at the log area.

## Description

### TECHNICAL FIELD

Systems, methods, and computer programs consistent with example embodiments of the present disclosure relate to a vehicle software testing, and more specifically, relate to the viewing of test case results in a vehicle software testing.

### BACKGROUND

In software development, software is required to be tested in order to ensure that the software functions as intended, meets specified requirements, and performs reliably in various scenarios. Software testing is a crucial part of the software development life cycle (SDLC) and is performed to identify defects, errors, or bugs in the software before it is deployed to the actual system.

Testing of a software for a vehicle may be done by designing a test case comprising a plurality of test steps that are to be run within a test environment. The results of running the test case within the test environment may then be generated and viewed by a user in order to evaluate the software.

In the related art, results of running a test case may be displayed as a simple pass/fail status for the test case as a whole, and/or be displayed as a general log associated with all elements of a test. In this regard, it is difficult for the user to determine which specific test steps within the test case pass or fail, and it is a time consuming process to read through the general log that is associated with all elements of the test. As such, the process to determine the specific causes of the failure may be time consuming and error prone. Accordingly, there is a need for a system that can allow the user to view results of running the test case, and quickly and efficiently identify specific causes of the failure.

### SUMMARY

Example embodiments of the present disclosure tests vehicle software. As such, example embodiments of the present disclosure provide a graphical user interface that allows the user to quickly view the test results (i.e., the test logs, the status, the graph, and the like) for a specific element and specific test steps of a test case at a specific point in time. Accordingly, the graphical user interface facilitates the analysis and identification of error within the test case, thereby reducing the time required to perform the same.

According to example embodiments, a system is provided. The system may include: a memory storage storing computer-executable instructions; and at least one processor communicatively coupled to the memory storage, wherein the at least one processor may be configured to execute the instructions to: generate a graphical user interface comprising at least a first portion and a second portion, where the first portion may include one or more elements of a test environment, and where the second portion may include a log area; receive a selection input selecting one of the one or more elements displayed at the first portion from a user; and in response to receiving the selection input, display a test log associated with only the selected one of the one or more elements at the log area.

According to example embodiments, the graphical user interface may further include a third portion; and the third portion may include one or more test steps of a test case, and a status associated with each of the one or more test steps.

According to example embodiments, the one or more elements may include one or more electronic control units associated with a type of vehicle.

According to example embodiments, the second portion may further include a graph area; and the graph area may include a graph showing one or more communications between the one or more elements over a period of time.

According to example embodiments, the graphical user interface may further include a fourth portion; and the fourth portion may include a video simulation of a simulated test environment.

According to example embodiments, the graphical user interface may further include a scrubber associated with the test log at the second portion and the video simulation at the fourth portion; and the at least one processor may be further configured to execute the instructions to: receive a sliding input sliding the scrubber to a time instance from the user; and in response to receiving the sliding input, update the test log displayed at the log area and the video simulation displayed at the fourth portion based on the time instance.

According to example embodiments, the fourth portion may further include an annotation window; and the at least one processor may be further configured to execute the instructions to: receive an annotation input from the user; and display the annotation input at the annotation window.

According to example embodiments, a method is provided. The method may include: generating a graphical user interface comprising at least a first portion and a second portion, where the first portion may include one or more elements of a test environment, and where the second portion may include a log area; receiving a selection input selecting one of the one or more elements displayed at the first portion from a user; and in response to receiving the selection input, displaying a test log associated with only the selected one of the one or more elements at the log area.

According to example embodiments, the graphical user interface may further include a third portion; and the third portion may include one or more test steps of a test case, and a status associated with each of the one or more test steps.

According to example embodiments, the one or more elements may include one or more electronic control units associated with a type of vehicle.

According to example embodiments, the second portion may further include a graph area; and the graph area may include a graph showing one or more communications between the one or more elements over a period of time.

According to example embodiments, the graphical user interface may further include a fourth portion; and the fourth portion may include a video simulation of a simulated test environment.

According to example embodiments, the graphical user interface may further include a scrubber associated with the test log at the second portion and the video simulation at the fourth portion; and the method may further include: receiving a sliding input sliding the scrubber to a time instance from the user; and in response to receiving the sliding input, updating the test log displayed at the log area and the video simulation displayed at the fourth portion based on the time instance.

According to example embodiments, the fourth portion may further include an annotation window; and the method may further include: receiving an annotation input from the user; and displaying the annotation input at the annotation window.

According to example embodiments, a non-transitory computer-readable recording medium is provided. The non-transitory computer-readable recording medium may have recorded thereon instructions executable by at least one processor to cause the at least one processor to perform a method including: generating a graphical user interface comprising at least a first portion and a second portion, where the first portion may include one or more elements of a test environment, and where the second portion may include a log area; receiving a selection input selecting one of the one or more elements displayed at the first portion from a user; and in response to receiving the selection input, displaying a test log associated with only the selected one of the one or more elements at the log area.

According to example embodiments, the graphical user interface may further include a third portion; and the third portion may include one or more test steps of a test case, and a status associated with each of the one or more test steps.

According to example embodiments, the one or more elements may include one or more electronic control units associated with a type of vehicle.

According to example embodiments, the second portion may further include a graph area; and the graph area may include a graph showing one or more communications between the one or more elements over a period of time.

According to example embodiments, the graphical user interface may further include a fourth portion; and the fourth portion may include a video simulation of a simulated test environment.

According to example embodiments, the graphical user interface may further include a scrubber associated with the test log at the second portion and the video simulation at the fourth portion; and the method may further include: receiving a sliding input sliding the scrubber to a time instance from the user; and in response to receiving the sliding input, updating the test log displayed at the log area and the video simulation displayed at the fourth portion based on the time instance.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like signs denote like elements, and wherein:
FIG. 1 illustrates a block diagram of example components in a Vehicle Software Testing (VST) system, according to one or more embodiments;
FIG. 2 illustrates example components of a graphical user interface (GUI) for testing a vehicle software, according to one or more embodiments;
FIG. 3 illustrates example components of a first portion of a graphical user interface (GUI) for testing a vehicle software, according to one or more embodiments;
FIG. 4 illustrates example components of a third portion of a graphical user interface (GUI) for testing a vehicle software, according to one or more embodiments; and
FIG. 5 illustrates a flow diagram of an example method for testing a vehicle software, according to one or more embodiments.

### DETAILED DESCRIPTION

The following detailed description of example embodiments refers to the accompanying drawings. The same reference numbers in different drawings may identify the same or similar elements.

The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code. It is understood that software and hardware may be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "at least one of [A] and [B]", "[A] and/or [B]", or "at least one of [A] or [B]" are to be understood as including only A, only B, or both A and B.

It is contemplated that features, advantages, and significances of example embodiments described hereinabove are merely a portion of the present disclosure, and are not intended to be exhaustive or to limit the scope of the present disclosure.

Further descriptions of the features, components, configuration, operations, and implementations of the threshold tuning system of the present disclosure, according to one or more embodiments, are provided in the following.

### Example System Architecture

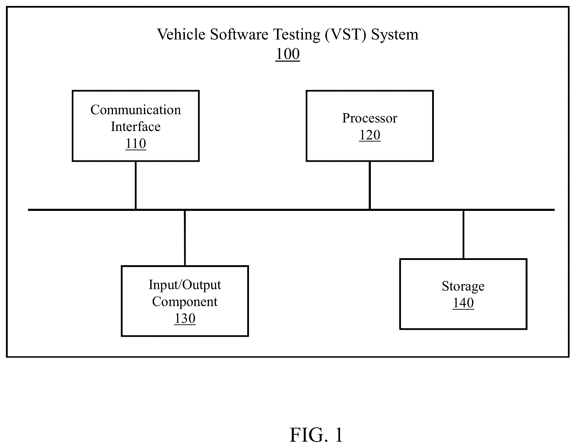

FIG. 1 illustrates a block diagram of example components in a Vehicle Software Testing (VST) system 100, according to one or more embodiments. The VST system 100 may include an apparatus, a system, a platform, a module, or the like, which may be configured to perform one or more operations or actions for testing a vehicle software.

As illustrated in FIG. 1, the VST system 100 may include at least one communication interface 110, at least one processor 120, at least one input/output component 130, and at least one storage 140, although it can be understood that the VST system 100 may include more or less components than as illustrated in FIG. 1, and/or may be arranged in a manner different from as illustrated in FIG. 1, without departing from the scope of the present disclosure.

The communication interface 110 may include at least one transceiver-like component (e.g., a transceiver, a separate receiver and transmitter, a bus, etc.) that enables the components of the VST system 100 to communicate with each other and/or to communicate with one or more components external to the VST system 100, such as via a wired connection, a wireless connection, or a combination of wired and wireless connections. For example, the communication interface 110 may include an Ethernet interface, an optical interface, a coaxial interface, an infrared interface, a radio frequency (RF) interface, a universal serial bus (USB) interface, a Wi-Fi interface, a cellular network interface, or the like.

For instance, the communication interface 110 may couple the processor 120 to the storage 140 to thereby enable them to communicate and to interoperate with each other in performing one or more operations.

According to one or more embodiments, the communication interface 110 may include one or more application programming interfaces (APIs) which allow the VST system 100 (or one or more components included therein) to communicate with one or more software applications.

The input/output component 130 may include at least one component that permits the VST system 100 to receive information and/or to provide output information. It can be understood that, in some embodiments, the input/output component 130 may include at least one input component (e.g., a touch screen display, a keyboard, a keypad, a mouse, a button, a switch, a microphone, etc.) and at least one output component (e.g., a display, a speaker, one or more light-emitting diodes (LEDs), etc.), each of which may be separated from each other. Additionally, or alternatively, the at least one input component may include a sensor for sensing information (e.g., a global positioning system (GPS) component, an accelerometer, a gyroscope, and/or an actuator).

The storage 140 may include one or more storage mediums suitable for storing data, information, and/or computer-executable instructions therein. According to example embodiments, the storage 140 may include at least one memory storage, such as a random access memory (RAM), a read only memory (ROM), and/or another type of dynamic or static storage device (e.g., a flash memory, a magnetic memory, and/or an optical memory) that stores information and/or instructions for use by the processor 120. Additionally or alternatively, the storage 140 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive. A computer-readable medium is defined herein as a non-transitory memory device. A memory device includes memory space within a single physical storage device or memory space spread across multiple physical storage devices.

According to example embodiments, the storage 140 may be configured to store information, such as raw data, metadata, or the like. Additionally or alternatively, the storage 140 may be configured to store one or more information associated with one or more operations performed by the processor 120. For instance, the storage 140 may store information defining the historical operation(s) performed by the processor 120 to test a vehicle software, one or more results of operations performed by the processor 120, or the like. Further, the storage 140 may store data or information required in testing a vehicle software.

In some implementation, the storage 140 may include a plurality of storage mediums, and the storage 140 may be configured to store a duplicate or a copy of at least a portion of the information in the plurality of storage mediums, for providing redundancy and for backing-up the information or the associated data. Furthermore, the storage 140 may also store computer-readable or computer-executable instructions which, when being executed by one or more processors (e.g., processor 120), causes the one or more processors to perform one or more actions/operations described herein

The processor 120 may include at least one processor capable of being programmed or being configured to perform a function(s) or an operation(s) described herein. For instance, the processor 120 may be configured to execute computer-executable instructions stored in at least one storage medium or a memory storage (e.g., storage 140, etc.) to thereby perform one or more actions or one or more operations described herein.

According to example embodiments, the processor 120 may be configured to receive (e.g., via the communication interface 110, via the input/output component 130, etc.) one or more signals and/or one or more user inputs defining one or more instructions for performing one or more operations. Further, the processor 120 may be implemented in hardware, firmware, or a combination of hardware and software. For instance, processor 120 may include at least one of a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processing or computing component.

According to example embodiments, the processor 120 may be configured to collect, to extract, and/or to receive one or more information (in the form of signal or data, etc.), and to process the received one or more information to thereby test a vehicle software.

The number and arrangement of components shown in FIG. 1 are provided as an example. In practice, VST system 100 may include additional components, fewer components, different components, or differently arranged components than those shown in FIG. 1. Additionally, or alternatively, a set of components (e.g., one or more components) of VST system 100 may perform one or more functions described as being performed by another set of components of VST system 100.

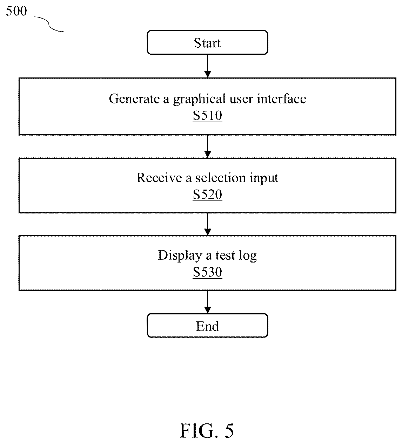

Descriptions of several example operations which may be performed by the processor 120 are provided below with reference to FIG. 5.

### Example of Vehicle Software Testing in the Present Disclosure

According to example embodiments, in order to test a vehicle software, one or more test cases may be designed and run within a test environment.

The test case may refer to a specific set of conditions and/or steps that are designed to verify the functionality or behavior of the software (or the system under test). The test case may define one or more actions and expected outcomes for a particular test scenario. The conditions and/or steps that are designed to verify the functionality or behavior of the software may be referred to as test steps included in the test case. According to example embodiments, one or more test steps may be included in a test case, which may include one or more of: a test case ID (e.g., a unique identifier or a set of numbers assigned to the test case for tracking and reference purpose), a test objective (e.g., description or specification of the goal or purpose of the test case), at least one test condition (e.g., precondition or initial state required for executing the test case, specific setup or configuration needed in order to trigger the test execution, etc.), at least one test operation (e.g., action or operation to be performed to execute the test case, necessary inputs or interactions with the software, etc.), at least one expected result (e.g., the anticipated outcomes or behaviors that are expected from the software when the test case is executed successfully, etc.), and any other suitable information.

The test environment may refer to a specific set of conditions and/or elements which the test case is to be run on (against). In particular, the test environment may include one or more vehicle elements that are involved in the test case. The one or more vehicle elements may refer to one or more elements associated with one or more components of a vehicle, such as electronic control units (ECUs), motors, and the like. For example, for a test case designed to test a software related to detecting and displaying obstacles near the vehicle's rear, the test environment may include the IVI ECU and ADAS ECU of the vehicle (one or more vehicle elements). According to example embodiments, the test environment may further include one or more environment elements that are involved in the test case. The one or more environment elements may refer to one or more elements associated with an environment of a vehicle. For example, for the test case designed to test the software related to detecting and displaying obstacles near the vehicle's rear, the test environment may further include obstacles near the vehicle's rear and rain (one or more environment elements), such that the test case may be able to evaluate the software associated with the IVI ECU and ADAS ECU of the vehicle when they are detecting and displaying obstacles near the vehicle's rear during the rain.

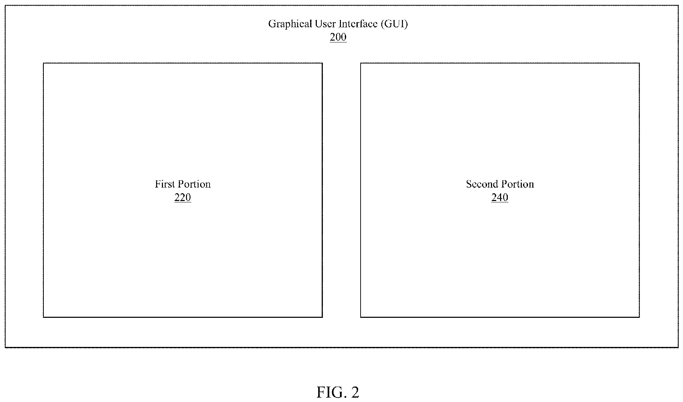

FIG. 2 illustrates example components of a graphical user interface (GUI) 200 for testing a vehicle software, according to one or more embodiments.

As shown in FIG. 2, the graphical user interface (GUI) 200 may include at least a first portion 220 and a second portion 240.

According to example embodiments, the first portion 220 may include one or more elements of a test environment. The one or more elements may include one or more vehicle elements and/or one or more environment elements. The one or more vehicle elements may be elements associated with one or more components of a vehicle in the test environment, such as electronic control units (ECUs), motors, and the like. According to example embodiments, the one or more vehicle elements may be elements associated with one or more components of a specific type (model) of a vehicle in the test environment. For example, the one or more elements may include one or more electronic control units (ECU) of a particular type of vehicle (which may be different from the ECUs in a different type of vehicle). The one or more environment elements may be elements associated with an environment of a vehicle in the test environment, such as an amount of rain, an amount of moisture, sunlight, a particular weather and the like.

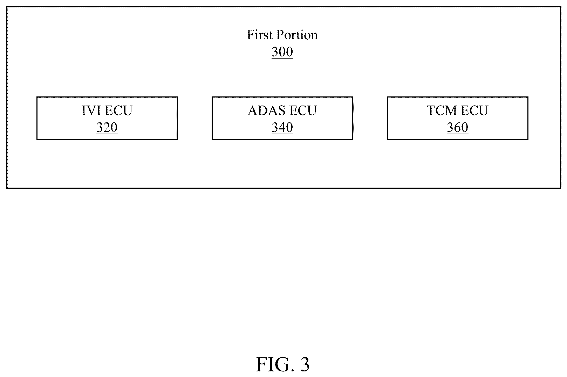

FIG. 3 illustrates example components of a first portion 300 of a graphical user interface (GUI) for testing a vehicle software, according to one or more embodiments. The first portion 300 may correspond to first portion 220 in FIG. 2, thus the features associated with the first portion 300 and the first portion 220 may be similarly applicable to each other, unless being explicitly described otherwise.

As shown in FIG. 3, the first portion 300 may include three elements: In-Vehicle Infotainment (IVI) electronic control unit (ECU) 320, Advanced Driver Assistant System (ADAS) electronic control unit (ECU) 340, and Transmission Control Module (TCM) electronic control unit (ECU) 360. The IVI ECU 320, ADAS ECU 340, and TCM ECU 360 may correspond to the IVI ECU, ADAS ECU, and TCM ECU in a vehicle, respectively. It can be understood that the configuration illustrated in FIG. 3 is simplified for descriptive purpose, and is not intended to limit the scope of the present disclosure in any way. For example, in practice, the number of elements can be any, and the elements can be any elements in a test environment as described above.

Here it may be understood that, for example, a user may want to perform testing with a test case that is to be run on a test environment comprising IVI ECU, ADAS ECU, and TCM ECU of a vehicle (i.e., the testing is performed to test the IVI ECU, ADAS ECU, and TCM ECU of the vehicle). Accordingly, the first portion may display the IVI ECU 320, ADAS ECU 340, and TCM ECU 360 as shown in FIG. 3.

Returning to FIG. 2, according to example embodiments, the second portion 240 may include a log area. The log area may display a test log associated with the test case. According to example embodiments, the log area may display a general test log associated with all elements of the test environment, and/or or display a test log associated with a specific element of the test environment. For example, the log area may display a general test log associated with IVI ECU 320, ADAS ECU 340, and TCM ECU 360 in the test environment, and/or or display a test log associated with one of the IVI ECU 320, ADAS ECU 340, and TCM ECU 360 in the test environment. It may be understood that a test log may refer to log showing various information, activities, results, failures, and any other relevant data related to the execution of a test as known in the art.

According to example embodiments, once a test case is run on a test environment comprising one or more elements displayed at the first portion, the VST system may display a general log associated with all of the one or more elements in the log area. Subsequently, a user may provide a selection input selecting one of the one or more elements displayed at the first portion, where the VST system may then display a test log associated with only the selected one of the one or more elements in the log area. For example, the user may select the ADAS ECU 340 displayed at the first portion 300 in FIG. 3, where the VST system may then display a test log associated with only the ADAS ECU 340 at the log area in the second portion 240. According to example embodiments, the user may provide the selection input by clicking on an element in the first portion 220.

Accordingly, the GUI may allow the user to quickly view a specific test log associated with a specific element of a test environment, thereby reducing the time required to analyze and identify a cause of error within the test case.

According to example embodiments, the GUI 200 may further include a third portion (not shown in FIG. 2). The third portion may include one or more test steps of a test case, along with a status associated with each of the one or more test steps.

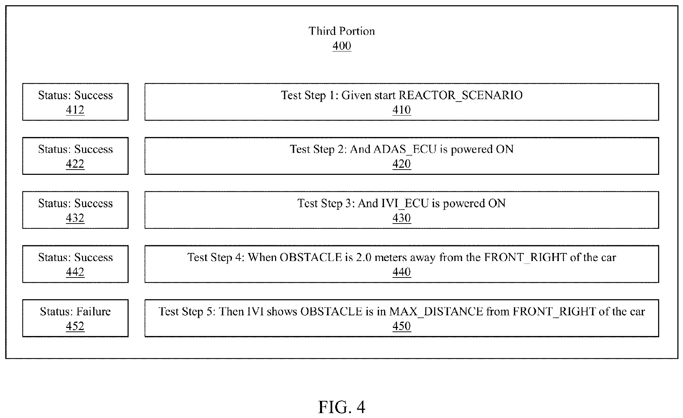

FIG. 4 illustrates example components of a third portion 400 of a graphical user interface (GUI) for testing a vehicle software, according to one or more embodiments. As shown in FIG. 4, the third portion 400 may include five test steps: test step 1 410, test step 2 420, test step 3 430, test step 4 440, and test step 5 450, as well as their associated statuses 412, 422, 432, 442, and 452, respectively. It can be understood that the configuration illustrated in FIG. 4 is simplified for descriptive purpose, and is not intended to limit the scope of the present disclosure in any way. For example, in practice, the number of test steps and the associated statuses within the third portion (and within a test case) can be any number, the specific content and format of the test steps can be any, and the specific format of the statuses can be any.

As illustrated in FIG. 4, the test step 1 410 may include a step "Given start REACTOR_SCENARIO", which defines an action of starting a test environment comprising predefined conditions and/or elements which the test case is to be run on. The test step 2 420 may include a step "And ADAS_ECU is powered ON", which defines an action of starting the Advanced Driver Assistance System (ADAS) electronic control unit (ECU) within the test environment. Similarly, the test step 3 430 may include a step "And IVI_ECU is powered ON", which defines an action of starting the In-Vehicle Infotainment (IVI) electronic control unit (ECU) within the test environment.

The test step 4 440 may include a step "When OBSTACLE is 2.0 meters away from the FRONT_RIGHT of the car", which defines a conditional scenario where an obstacle is 2.0 meters away from the front right side of the car. The test step 5 450 may include a step "Then IVI shows OBSTACLE is in MAX_DISTANCE from FRONT_RIGHT of the car", which defines an expected outcome of the conditional scenario defined in test step 4 440 where the in-vehicle infotainment shows that the obstacle is at max distance from the front right side of the car.

Further, status 412 may be associated with test step 1 410, and may indicate that test step 1 410 is a success (i.e., the start of the "REACTOR_SCENARIO" is a success). Similar description applies to status 422, status 432, and status 442 that may be associated with test step 2 420, test step 3 430, and test step 4 440. In this regard, status 452 may be associated with test step 5 450, and may indicate that test step 5 450 is a failure (i.e., the in-vehicle infotainment is unable to show that the obstacle is at max distance from the front right side of the car as an expected outcome of the scenario defined in test step 4 440). As such, the user may be able to identify that the cause of failure may be related to the in-vehicle infotainment, and may then select the IVI ECU 320 in the first portion 300 in order to view the test log associated with the IVI ECU 320 to further review and identify the cause of failure.

Accordingly, the GUI may allow the user to quickly identify where specifically within the test case (i.e., which specific test steps within the test case) has failed, and then, through viewing a specific test log at the log area, quickly analyze and identify a cause of error (failure) within the test case.

Returning to FIG. 2, according to example embodiments, the second portion 240 may further include a graph area. The graph area may include a graph showing one or more communications between the one or more elements over a period of time. According to example embodiments, the graph may be a time series graph. For example, the graph may show a communication between the IVI ECU 320 and ADAS ECU 340 over a period of time (e.g., from the start of the test case to the time when test step 5 450 fails.

Accordingly, the GUI 200 may allow the user to quickly view the interaction between the elements of the test environment over a period of time, and then, through viewing a specific test log associated with a specific element at the log area, quickly analyze and identify a cause of error within the test case.

According to example embodiments, the GUI 200 may further include a fourth portion (not shown in FIG. 2). The fourth portion may include a video simulation of a simulated test environment which the test case is to be run on. For example, for a test case that aims to test the communication between the IVI ECU 320 and ADAS ECU 340 during a reverse parking, the fourth portion may show a video of a simulation of a vehicle performing a reverse parking.

Accordingly, the GUI 200 may allow the user to visualize the real world scenario of the vehicle while performing the test, which improves the time to analyze and identify a cause of error within the test case.

According to example embodiments, the user may be able to add an annotation to the video simulation at the fourth portion. In particular, the fourth portion may further include an annotation window where the user may provide an annotation input to the annotation window. The annotation input may include comments, drawings, symbols, and the like, which the user would like to add as an annotation to the video simulation. Accordingly, the user may provide an annotation to the system, where such annotation may be displayed at the annotation window.

According to example embodiments, the GUI 200 may further include a scrubber (not shown in FIG. 2), where the scrubber may be associated with one or more of the second portion 240, the third portion, and the fourth portion.

According to example embodiments, the scrubber may be associated with the second portion 240. In particular, the scrubber may be associated with the test log displayed at the log area in the second portion 240, such that when the user moves the scrubber (i.e., provides an input sliding the scrubber) to a specific time instance, the test log displayed at the log area may be updated to reflect the test log that is generated up until that specific time instance.

According to example embodiments, the scrubber may further be associated with the graph at the graph area in the second portion 240, such that, that when the user moves the scrubber (i.e., provides an input sliding the scrubber) to a specific time instance, the graph at the graph area may be updated to reflect the communications between the one or more elements up until that specific time instance

According to example embodiments, the scrubber may be associated with the third portion. In particular, the scrubber may be associated with the statuses displayed at the third portion, such that when the user moves the scrubber (i.e., provides an input sliding the scrubber) to a specific time instance, the statuses at the third portion may be updated to reflect the statuses at that specific time instance.

According to example embodiments, the scrubber may be associated with the fourth portion. In particular, the scrubber may be associated with the video simulation displayed at the fourth portion, such that when the user moves the scrubber (i.e., provides an input sliding the scrubber) to a specific time instance, the video simulation displayed at the fourth portion may be updated to reflect the video simulation at that specific time instance.

Accordingly, the GUI 200 may allow the user to quickly view the test results (i.e., the test logs, the status of the test steps, the graph, and the like) at a specific point in time, thereby facilitating the analysis of the error within the test case and reducing the time required to perform the same.

It can be understood that the configuration illustrated in FIG. 2 is simplified for descriptive purpose, and is not intended to limit the scope of the present disclosure in any way. For example, in practice, the relative position, relative size, and/or shape of each of the elements within the GUI 200 can be any.

### Example Operations for Testing a Vehicle Software in the Present Disclosure

In the following, several example operations performable by the VST system of the present disclosure are described with reference to FIG. 5.

FIG. 5 illustrates a flow diagram of an example method 500 for testing a vehicle software, according to one or more embodiments. One or more operations in method 500 may be performed by at least one processor (e.g., processor 120) of the VST system.

As illustrated in FIG. 5, at operation S510, the at least one processor may be configured to generate a graphical user interface. The graphical user interface may include at least a first portion and a second portion, where the first portion may include one or more elements of a test environment, and the second portion may include a log area.

According to example embodiments, the one or more elements may include one or more vehicle elements and/or one or more environment elements. The one or more vehicle elements may be elements associated with one or more components of a vehicle in the test environment, such as electronic control units (ECUs), motors, and the like. According to example embodiments, the one or more vehicle elements may be elements associated with one or more components of a specific type (model) of a vehicle in the test environment. For example, the one or more elements may include one or more electronic control units (ECU) of a particular type of vehicle. The one or more environment elements may be elements associated with an environment of a vehicle, such as an amount of rain, an amount of moisture, sunlight, a particular weather and the like.

According to example embodiments, the log area may display a test log associated with a test case. In particular, the log area may display a general test log associated with all elements of the test environment, and/or or display a test log associated with a specific element of the test environment. The method then proceeds to operation S520.

At operation S520, the at least one processor may be configured to receive a selection input selecting one of the one or more elements displayed at the first portion. The selection input may be received from a user. According to example embodiments, the selection input may include a click input. The method then proceeds to operation S530.

At operation S530, the at least one processor may be configured to, in response to receiving the selection input, display a test log. The test log may be associated with only the selected one of the one or more elements, and may be displayed at the log area of the second portion.

Upon performing operation S530, the method 500 may be ended or be terminated. Alternatively, method 500 may return to operation S520, such that the at least one processor may be configured to repeatedly perform, for at least a predetermined amount of time, the receiving the selection input (at operation S520), and the displaying the test log (at operation S530). For instance, the user may continuously (or periodically) want to see test logs associated with different elements at the first portion. Accordingly, the at least one processor may then restart the receiving the selection input (at operation S520), and the displaying the test log (at operation S530).

According to example embodiments, the second portion of the graphical user interface may further include a graph area. The graph area may include a graph showing one or more communications between the one or more elements over a period of time. According to example embodiments, the graph may be a time series graph.

According to example embodiments, the graphical user interface may further include a third portion. The third portion may include one or more test steps of a test case, and a status associated with each of the one or more test steps. According to example embodiments, once the test case is run, each of the statuses may be updated to indicate the status of the associated one of the one or more test steps, such as success, fail, and the like.

According to example embodiments, the graphical user interface may further include a fourth portion. The fourth portion may include a video simulation of a simulated test environment.

According to example embodiments, the graphical user interface may further include a scrubber, where the scrubber may be associated with one or more of the second portion, the third portion, and the fourth portion.

According to example embodiments, the scrubber may be associated with the test log displayed at the log area in the second portion. In this regard, the at least one processor may be configured to receive a sliding input sliding the scrubber to a time instance from the user. Subsequently, in response to receiving the sliding input, the at least one processor may be configured to update the test log displayed at the log area based on the time instance. For example, the test log displayed at the log area may be updated to reflect the test log that is generated up until the time instance.

According to example embodiments, the scrubber may be associated with the graph at the graph area in the second portion. In this regard, the at least one processor may be configured to receive a sliding input sliding the scrubber to a time instance from the user. Subsequently, in response to receiving the sliding input, the at least one processor may be configured to update the graph displayed at the graph area based on the time instance. For example, the graph displayed at the graph area may be updated to reflect the graph (communication between the one or more elements) that is generated up until the time instance.

According to example embodiments, the scrubber may be associated with the status at the third portion. In this regard, the at least one processor may be configured to receive a sliding input sliding the scrubber to a time instance from the user. Subsequently, in response to receiving the sliding input, the at least one processor may be configured to update the status displayed at the third portion based on the time instance. For example, the status displayed at the third portion may be updated to reflect the status of each of the test steps at the time instance.

According to example embodiments, the scrubber may be associated with the video simulation at the fourth portion. In this regard, the at least one processor may be configured to receive a sliding input sliding the scrubber to a time instance from the user. Subsequently, in response to receiving the sliding input, the at least one processor may be configured to update the video simulation at the fourth portion based on the time instance. For example, the video simulation at the fourth portion may be updated to reflect the video simulation at the time instance.

According to example embodiments, the fourth portion may further include an annotation window. In this regard, the at least one processor may be configured to receive an annotation input from the user. The annotation input may include comments, drawings, symbols, and the like, which the user would like to add as an annotation to the video simulation. Subsequently, in response to receiving the annotation input, the at least one processor may be configured to display the annotation input at the annotation window.

### Various Aspects of Embodiments

The foregoing disclosure provides illustration and description, but is not intended to be exhaustive or to limit the implementations to the precise form disclosed. Modifications and variations are possible in light of the above disclosure or may be acquired from practice of the implementations.

Some embodiments may relate to a system, a method, and/or a computer readable medium at any possible technical detail level of integration. Further, one or more of the above components described above may be implemented as instructions stored on a computer readable medium and executable by at least one processor (and/or may include at least one processor). The computer readable medium may include a computer-readable non-transitory storage medium (or media) having computer readable program instructions thereon for causing a processor to carry out operations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer readable media according to various embodiments. In this regard, each block in the flowchart or block diagrams may represent a microservice(s) module, segment, or portion of instructions, which comprises one or more executable instructions for implementing the specified logical function(s). The method, computer system, and computer readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

It can be understood that numerous modifications and variations of the present disclosure are possible in light of the above teachings. It will be apparent that within the scope of the appended clauses, the present disclosures may be practiced otherwise than as specifically described herein.

## Claims

1. A system comprising:
a memory storage storing computer-executable instructions; and
at least one processor communicatively coupled to the memory storage, wherein the at least one processor is configured to execute the instructions to:
generate a graphical user interface comprising at least a first portion and a second portion, wherein the first portion comprises one or more elements of a test environment, and wherein the second portion comprises a log area;
receive a selection input selecting one of the one or more elements displayed at the first portion from a user; and
in response to receiving the selection input, display a test log associated with only the selected one of the one or more elements at the log area.

2. The system according to claim 1, wherein:
the graphical user interface further comprises a third portion; and
the third portion comprises one or more test steps of a test case, and a status associated with each of the one or more test steps.

3. The system according to claim 1 or 2, wherein the one or more elements comprise one or more electronic control units associated with a type of vehicle.

4. The system according to any one of claims 1 to 3, wherein:
the second portion further comprises a graph area; and
the graph area comprises a graph showing one or more communications between the one or more elements over a period of time.

5. The system according to any one of claims 1 to 4, wherein:
the graphical user interface further comprises a fourth portion; and
the fourth portion comprises a video simulation of a simulated test environment.

6. The system according to claim 5, wherein:
the graphical user interface further comprises a scrubber associated with the test log at the second portion and the video simulation at the fourth portion; and
the at least one processor is further configured to execute the instructions to:
receive a sliding input sliding the scrubber to a time instance from the user; and
in response to receiving the sliding input, update the test log displayed at the log area and the video simulation displayed at the fourth portion based on the time instance.

7. The system according to claim 5 or 6, wherein:
the fourth portion further comprise an annotation window; and
the at least one processor is further configured to execute the instructions to:
receive an annotation input from the user; and
display the annotation input at the annotation window.

8. A method comprising:
generating a graphical user interface comprising at least a first portion and a second portion, wherein the first portion comprises one or more elements of a test environment, and wherein the second portion comprises a log area;
receiving a selection input selecting one of the one or more elements displayed at the first portion from a user; and
in response to receiving the selection input, displaying a test log associated with only the selected one of the one or more elements at the log area.

9. The method according to claim 8, wherein:
the graphical user interface further comprises a third portion; and
the third portion comprises one or more test steps of a test case, and a status associated with each of the one or more test steps.

10. The method according to claim 8 or 9, wherein the one or more elements comprise one or more electronic control units associated with a type of vehicle.

11. The method according to any one of claims 8 to 10, wherein:
the second portion further comprises a graph area; and
the graph area comprises a graph showing one or more communications between the one or more elements over a period of time.

12. The method according to any one of claims 8 to 11, wherein:
the graphical user interface further comprises a fourth portion; and
the fourth portion comprises a video simulation of a simulated test environment.

13. The method according to claim 12, wherein:
the graphical user interface further comprises a scrubber associated with the test log at the second portion and the video simulation at the fourth portion; and
the method further comprises:
receiving a sliding input sliding the scrubber to a time instance from the user; and
in response to receiving the sliding input, updating the test log displayed at the log area and the video simulation displayed at the fourth portion based on the time instance.

14. The method according to claim 12 or 13, wherein:
the fourth portion further comprise an annotation window; and
the method further comprises:
receiving an annotation input from the user; and
displaying the annotation input at the annotation window.

15. A computer program to cause at least one processor to perform a method comprising:
generating a graphical user interface comprising at least a first portion and a second portion, wherein the first portion comprises one or more elements of a test environment, and wherein the second portion comprises a log area;
receiving a selection input selecting one of the one or more elements displayed at the first portion from a user; and
in response to receiving the selection input, displaying a test log associated with only the selected one of the one or more elements at the log area.
